# EUROPEAN PATENT APPLICATION

(11) **EP 1 798 955 A2**
(43) Date of publication of application: **20.06.2007**
(21) Application number: 06291809.9
(22) Date of filing: 23.11.2006
(51) Int. Cl.: H04N 5/00, H04N 7/24

(54) **Apparatus for receiving cable broadcast data and method for transmitting/receiving cable broadcast software**

(30) Priority: 19.12.2005 KR 20050125434
(71) Applicant: LG Electronics Inc., Youngdungpo-Gu Seoul (KR)
(72) Inventor: Choi, Hyun Sik, Gangdong-gu Seoul 134-808 (KR)
(74) Representative: Cabinet Plasseraud

(57) **Abstract**

An apparatus for receiving cable broadcast data and a method for transmitting/receiving cable broadcast software are disclosed. It is provided a method for receiving software by a host, the method includes receiving information of a software code block, receiving the software code block using the received information and outputting download control information including information indicating reception failure of the software code block. The information of the software code block at the receiving step is indicative of at least one of vendor information of the host, hardware version information of the host, and locator information of the software code block. A cable broadcast receiver and a method for transmitting/receiving cable broadcast software according to the present invention can effectively install or update software of a receiver of a cable broadcast system.

## Description

This application claims the benefit of Korean Patent Application No. 10-2005-0125434, filed on December 19, 2005, which is hereby incorporated by reference as if fully set forth herein.

### BACKGROUND OF THE INVENTION

### Field of the Invention

The present invention relates to an apparatus for receiving cable broadcast data and a method for transmitting/receiving cable broadcast software, and more particularly to a cable broadcast receiver for effectively installing or updating software of a receiver of a cable broadcast system, and a method for transmitting/receiving cable broadcast software.

### Discussion of the Related Art

Generally, a cable broadcast system is mainly divided into a transmitter and a receiver. The cable broadcast system may be classified into a cable broadcast station for transmitting cable broadcast data and a cable broadcast receiver for receiving the cable broadcast data from the cable broadcast station.

Typically, the cable broadcast station is called a SO (System Operator) headend or a MSO (Multiple System Operator). The SO headend indicates a composite cable broadcast enterprise (i.e., a local cable TV broadcast enterprise). The MSO indicates a plurality of system operators (SOs). A cable broadcast receiver may separate a cable card including a conditional access (CA) system from a main body. For example, the cable card may be equal to a PCMCIA (Personal Computer Memory Card International Association) card, and may be detachably connected to a main-body slot of the cable broadcast receiver. The main body into which the cable card is inserted may also be called a host as necessary. For example, the host may be a digital built-in television or a digital ready television, etc. A specific device including the host and the cable card may be called a cable broadcast receiver. For the convenience of description and better understanding of the present invention, it should be noted that a specific device capable of receiving digital cable broadcast data is referred to as a host, and a specific card capable of broadcasting the cable broadcast data to the host after being connected to the host as a slot is called a cable card (CableCARD).

The cable headend or a plant may receive broadcast signals from television broadcast stations over a plurality of communication networks. The cable headend receives the cable broadcast data over the network including nodes, and transmits the received cable broadcast data to the cable broadcast receiver. The host and the cable-card may receive or transmit signals over a cable network capable of bidirectionally transmitting data. The cable-broadcast headend transmits software codes capable of being executed by the cable broadcast receiver via a cable. The cable broadcast receiver receives the software codes at a remote site, and executes the software codes, such that it may install or update the software corresponding to the software codes.

The above-mentioned software codes may be transmitted to a destination at the same time. If required, the software codes may also be transmitted to the destination in divided block units. The cable broadcast receiver may integrate the received software code blocks into a total code, and may execute the integrated software codes, so that it may update the software with new software. For the convenience of description, it should be noted that each of the divided blocks of the software is called a software code block or a download data block (DDB).

However, provided that some code blocks from among all software codes are not transmitted when the cable broadcast receiver receives the software code block, all the software code blocks are re-transmitted, resulting in the occurrence of system inefficiency. Also, if the cable broadcast receiver does not receive some code blocks, the cable headend cannot easily update the software codes with new software codes. In the case of re-transmitting all the software code blocks as described above, an amount of transmission information unavoidably increases.

### SUMMARY OF THE INVENTION

Accordingly, the present invention is directed to an apparatus for receiving cable broadcast data and a method for transmitting/receiving cable broadcast software that substantially obviate one or more problems due to limitations and disadvantages of the related art.

An object of the present invention is to provide a cable broadcast receiver for effectively installing or updating software of a receiver of a cable broadcast system, and a method for transmitting/receiving cable broadcast software.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, it is provided that a method for receiving software by a host, the method includes receiving information of a software code block, receiving the software code block using the received information and outputting download control information including information indicating reception failure of the software code block. The information of the software code block at the receiving step is indicative of at least one of vendor information of the host, hardware version information of the host, and locator information of the software code block. The download control information at the receiving step includes at least one of information indicating beginning of reception of the software code block by the host, information indicating completion of reception of the software code block, information indicating that the host cannot find the software code block to be received from a headend, information indicating a number of retry times for receiving the software code block, information indicating whether the received software code block is damaged, information indicating certification failure of the received software code block, information indicating a maximum number of rebooting retry times after receiving the software code block, and information indicating reception failure of the software code block. The information indicating the reception failure of the specific software code block includes a serial number of the software code block not received.

In another aspect of the present invention, it is provided that a method for transmitting cable broadcast software to a host includes transmitting information of a software code block, transmitting the software code block, if a response for requesting the software code block corresponding to the information of the software code block is received and re-transmitting the software code block associated with reception failure information, if reception control information including the reception failure information of the software code block is received. The reception failure information at the re-transmitting step is indicative of a serial number of the software code block not transmitted.

In another aspect of the present invention, it is provided that a method for transmitting/receiving software from a transmission end of software by a host, the method includes transmitting, by the transmission end, information of a software code block, receiving, by the host, the information of the software code block, transmitting, by the host, a transmission request of the software code block using the information of the software code block, transmitting, by the transmitting end, the requested software code block corresponding to the transmission request of the host, outputting, by the host, download control information including reception failure information of the software code block, if the requested software code block is not received,; and re-transmitting, by the transmission end, the software code block indicated in the download control information, after receiving the download control information.

In another aspect of the present invention, it is provided that a cable broadcast receiver includes a signal processing unit for receiving information of a software code block, a signal receiving unit for receiving the software code block associated with the information of the software code block, a software storage unit for storing the received software code block, a control unit for transmitting download control information including the reception failure information if the software code block indicated in the information of the received software code block is not received and a transmitting unit for transmitting the download control information generated from the control unit.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 exemplarily shows a data carousel structure for transmitting software codes in a cable broadcast system according to the present invention;

FIG. 2 is a flow chart illustrating a method for controlling a cable broadcast receiver to receive software code blocks from a cable headend according to the present invention;

FIG. 3 exemplarily shows a code equipped with download control information capable of transmitting software code blocks to a cable card when a host starts receiving the software code blocks or finishes receiving the same according to the present invention;

FIG. 4 is a flow chart illustrating a software transmission/reception method according to the present invention; and

FIG. 5 is a block diagram illustrating a cable broadcast receiver according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

A preferred embodiment of the present invention will hereinafter be described with reference to the appended drawings. A cable broadcast system controls a cable broadcast headend to transmit software codes via cable signals, such that it can update software of a cable broadcast receiver with new software.

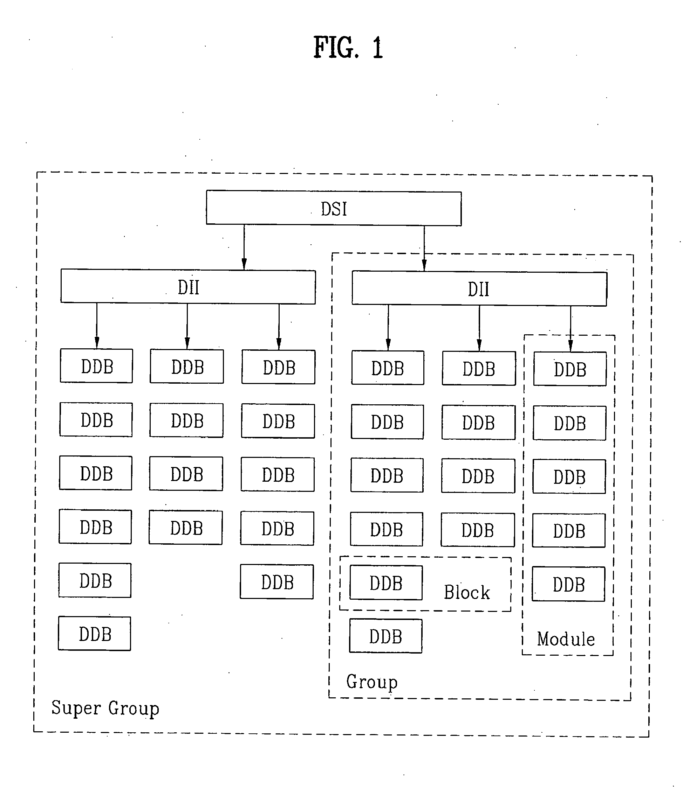

FIG. 1 exemplarily shows a data carousel structure for transmitting software code blocks in a cable broadcast system according to the present invention. Referring to FIG. 1, if a cable broadcast headend transmits software codes, the software codes may be divided into one or more DDBs (Download Data Blocks), such that the DDBs are transmitted to a destination as the software codes.

The DDB is indicative of a single receivable software block. A plurality of DDBs may correspond to a single module. A plurality of DDBs or modules may configure a group by a DII (Download Info Indication) message. At least one group may configure a super-group by a DSI (Download Server Initiate) message.

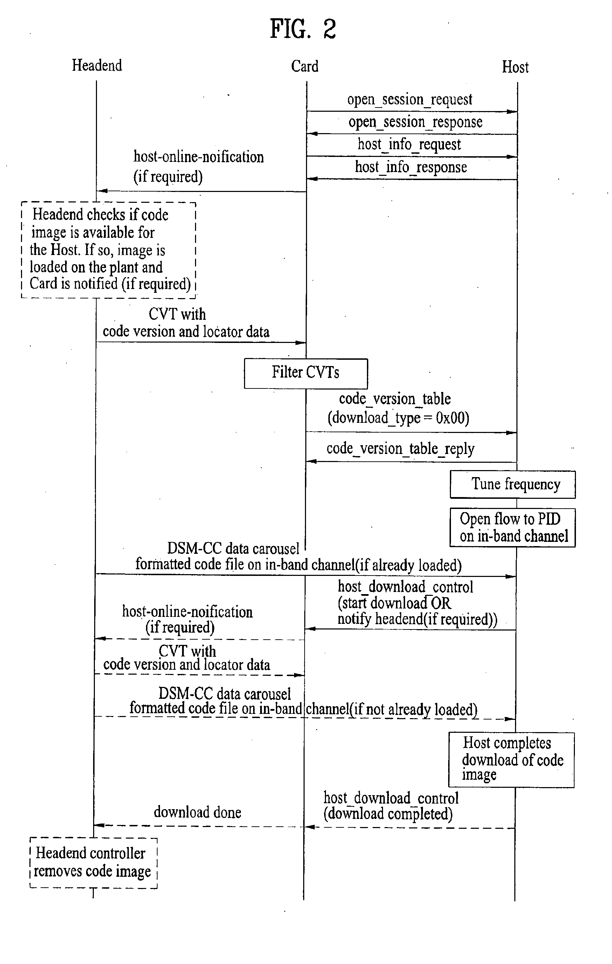

FIG. 2 is a flow chart illustrating a method for controlling a cable broadcast receiver to receive software code blocks from a cable headend according to the present invention. A process for receiving software code blocks (or receiving data blocks) will hereinafter be described with reference to FIG. 2.

If a host boots up, the cable transmits a session open request to the host (open_session_request). If the host answers the session open request (open_session_response), the cable card request host information from the host (host_info_request), such that it can receive hardware- and software- information from the host (host_info_response). The cable card may transmit the information received from the host to the headend (host_online_notification). The headend determines whether to transmit a new software code to the host. If it is determined that the headend transmits the new software code to the host, the headend may transmit the software code to the host. In order to transmit the software code, the cable headend may transmit data (e.g., software version information or software locator information) associated with the software code to be transmitted via a cable.

For the convenience of description and better understanding of the present invention, it should be noted that the aforementioned software-code-associated data to be received in the cable broadcast receiver is referred to as download code information. If the cable broadcast receiver receives specific information from the cable headend, this operation is called a term "download". If the cable headend transmits software download code information via the cable, the cable card determines whether the host connected to the cable card is associated with the software download code information. If it is determined that the host is associated with the software download code information, the cable card filters the software download code information (Filters CVTs), such that the host can receive the filtered software download code information (code_version_table). A representative example of the software download code information is a CVT (Code Version Table), and a detailed description thereof will hereinafter be described in detail.

The CVT (Code Version Table) exemplarily indicates data associated with software reception (Rx) code information including vendor (i.e., a manufacturing company) information or hardware version information of the host. The CVT may include a variety of information (e.g., MAC address or host ID). The host can acquire either code version information of software to be downloaded from the CVT filtered by the cable card or locator information of the software. If the host receives the above-mentioned information from the cable card and answers the received information (code_version_table_reply), the cable broadcast system performs frequency-tuning, and can receive software code blocks from a specific channel using the software locator information. The above-mentioned software code blocks may be transmitted in block units from the data carousel structure of FIG. 1 to a destination (DSM-CC data carousel). The host can transmit download control information associated with the beginning or completion of the software code block reception to the cable card (host_download_control (start download)). Thereafter, if the cable card receives the information indicating the beginning or completion of the software code blocks from the host, it can inform the cable headend of the reception of the above-mentioned information indicating the beginning or completion of the software code blocks (host_online_notification). If the cable card transmits specific information indicating a reception failure of all the software code blocks to the cable headend (CVT with code version and locator data), the cable headend re-transmits all the software code blocks so as to allow the host to receive the failed software code blocks (DSM-CC data carousel).

If the host does not completely receive the software code blocks within a predetermined period of time, the host re-attempts to receive all the software code blocks from the beginning. If the host fails to receive the software code blocks although it has re-attempted to receive the software code blocks a predetermined number of times, the cable card may transmit information indicating the reception failure to the headend. Otherwise, if the host receives all the software code blocks, the host may re-transmit the download control information indicating whether the software code blocks have been completely received to the cable card (host_download_control (download completed)).

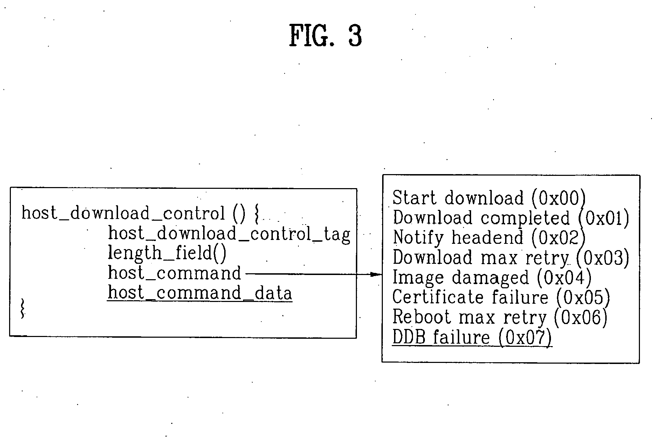

FIG. 3 exemplarily shows a code equipped with download control information capable of transmitting software code blocks to a cable card when a host starts receiving the software code blocks or finishes receiving the same according to the present invention. A method for receiving software according to the present invention will hereinafter be described with reference to FIG. 3.

Referring to FIG. 3, the download control information code may assign a host download control tag (host_download_control_tag) and a field length (length_field()), and may include host's download control information (host_command).

For example, the download control information (host_command) may include at least one of code-block's download start information (start download), download completed information (download completed), notify headend information (notify headend) created when the host cannot find codes to be received from the data carousel, download max retry information (download max retry) for indicating the number of download retry times, image damaged information (image damaged) for indicating whether a code image is damaged, certificate failure information (certificate failure) for indicating the certification failure of Rx (Reception) codes, and reboot max retry information (reboot max retry) for indicating the number of maximum rebooting times after receiving the codes, and DDB failure information for indicating a reception failure of a specific DDB.

The "start download" information from among the download control information indicates that the host informs the headend of the beginning of the software code downloading via the data carousel. As can be seen from FIG. 3, a specific information value "0x00" is assigned to the "start download" information.

The "download completed" information is transmitted to the cable headend when the host completely receives all the software code blocks. As can be seen from FIG. 3, a specific information value "0x01" is assigned to the "download completed" information.

The "notify headend" information indicates that the host cannot find codes to be received. Provided that the host acquires/receives locator information of the software code blocks from the software download code information, and then cannot find the code blocks at the locator, the "notify headend" information is transmitted to the headend. As can be seen from FIG. 3, a specific value "0x02" is assigned to the "notify headend" information.

The "download max retry" information is transmitted from the host to the headend on the condition that the host has failed to receive the software codes a predetermined number of download retry times. The "download max retry" information re-receives all the software code blocks when the host does not receive the software code blocks within a predetermined period of time. If the number of retry times reaches the number of maximum retry times, the "download max retry" information informs the headend of the number of retry times equal to the number of maximum retry times. As can be seen from FIG. 3, a specific value "0x03" is assigned to the "download maxi retry" information.

The "image damaged" information is transmitted from the host to the headend when the received software code file is broken or damaged. As can be seen from FIG. 3, a specific value "0x04" is assigned to the "image damaged" information.

The "certificate failure" information is transmitted from the host to the headend when the software codes to be downloaded are not authenticated. As can be seen from FIG. 3, a specific value "0x05" is assigned to the "certificate failure" information.

If the software code blocks are received and executed by rebooting the host, and the number of host-rebooting times caused by the execution failure reaches the number of maximum rebooting times, the "reboot max retry" information is transmitted from the host to the headend. As can be seen from FIG. 3, a specific value "0x06" is assigned to the "reboot max retry" information.

A method for receiving software according to a first preferred embodiment of the present invention can transmit the download failure information of a specific DDB (Download Data Block) to the headend. The host receives the DDB from the headend, and may feed back the DDB reception situation to the headend using Rx (Reception) failure information of the specific DDB.

Generally, in the case of receiving a software code including several DDBs, one or two DDBs from among several DDBs are not received, such that the software code cannot be completed.

In this case, if the code block is not found in the above-mentioned information, the host transmits the "notify headend" information indicating that the code block to be received is not found. If the host re-attempts to receive the code block to be received, the host transmits the "download max retry" information, such that it re-receives the code block from the beginning. If an unexpected error occurs in the code image after the host finishes receiving the code block, the host transmits the "image damaged" information, such that it re-receives the DDBs from the beginning.

However, provided that the host re-receives all the DDBs under the above-mentioned situation, the host serves as an inefficient system, and a reception time of the host is greatly increased. Therefore, unexpected problems occur in receiving other code blocks even if the host receives all the DDBs, such that the software codes cannot be easily received in the host.

Therefore, if unexpected problems occur in receiving the specific DDB from among all the DDBs, the host informs the cable broadcast of the Rx-failed DDB's number, such that it can increase the number of reception times of the DDB required for the cable headend. As can be seen from FIG. 3, the host informs the cable headend of the non-transmitted DDB number. In this case, the DDB is not transmitted as the host command data (host_command_data).

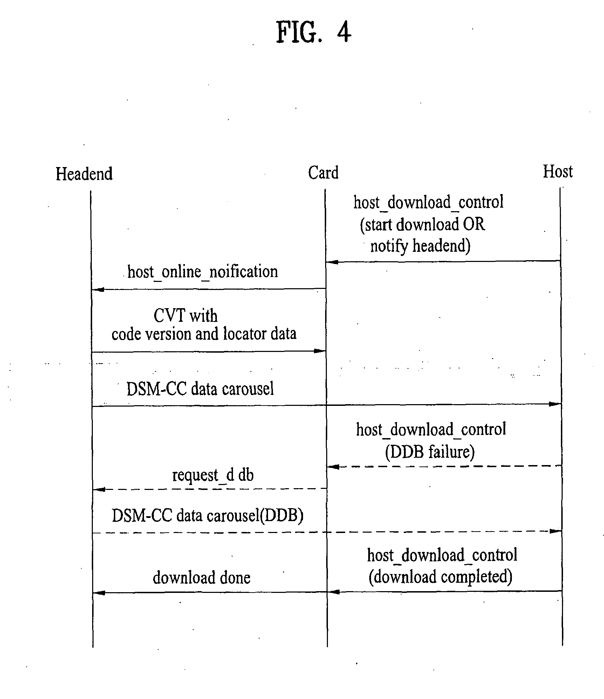

FIG. 4 is a flow chart illustrating a software transmission/reception method according to the present invention. A software reception method may correspond to a software transmission method as necessary. For the convenience of description, it should be noted that the software reception method will firstly be described as an example of the present invention. The above-mentioned software reception method indicates that the cable card receives information from the cable headend. The above-mentioned software transmission method indicates that the cable headend transmits information to the cable card.

If the host receives the software download code information, and receives software code blocks associated with the received software download code information, the cable headend may transmit the software code blocks to the host in block units. If the host receives the software code blocks, it may transmit the "start download" information indicating the beginning of the software code blocks (host_download_control (start download)). Thereafter, if the cable card receives specific information indicating the beginning or completion of the DDB from the host, the cable card may inform the headend of the reception of the specific information (host_online_notification).

The host can receive a plurality of DDBs from the data carousel using the software CVT. If the host does not receive a specific DDB, the host may transmit DDB failure information indicating the reception failure of the code block to the cable card (host_download_control (DDB failure)). If the cable card requests a specific DDB from the headend (request_ddb), the headend may re-transmit the DDB to the host (DSM-CC data carousel (DDB)). Therefore, although the specific DDB is not transmitted, the host can receive only the specific DDB without re-attempting to receive the DDB from the beginning.

According to the above-mentioned method, the cable headend receives information indicating the beginning or completion of the host code block reception, the reception failure information of the code block, and details information indicating the progression of the code block reception, and may control the host to receive the code block. If the host receives all the DDBs, the host may transmit specific information indicating that the DDBs are completely received to the cable card.

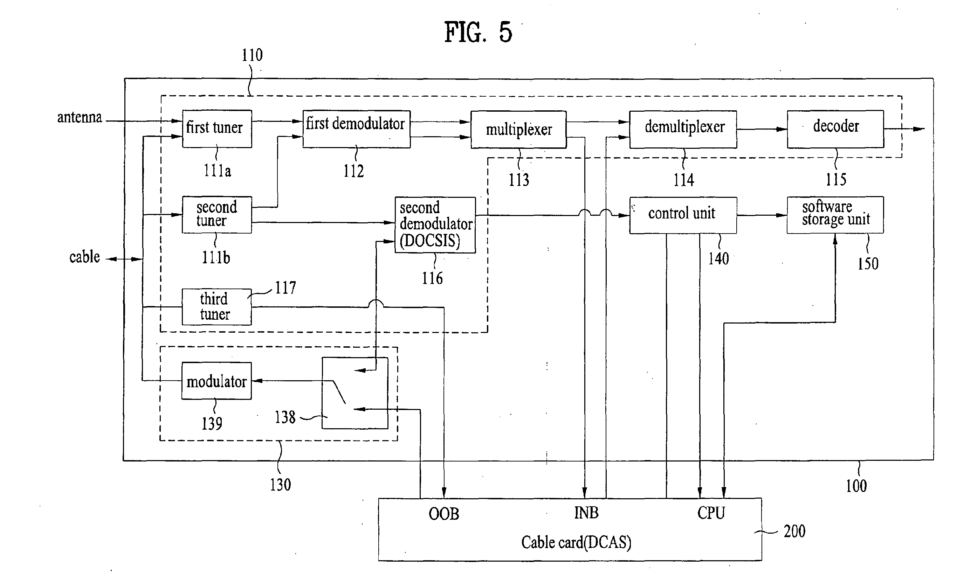

FIG. 5 is a block diagram illustrating a cable broadcast receiver according to the present invention. A cable broadcast receiver according to the present invention will hereinafter be described with reference to FIG. 5.

Referring to FIG. 5, the cable broadcast receiver includes a host 100, and a cable card 200 detachably connected to the host 100. Generally, the host 100 may receive only the cable broadcast signals, or may receive at least one of a terrestrial broadcast signal and a satellite broadcast signal. The preferred embodiment shown in FIG. 5 has been designed considering an exemplary cable broadcast receiver capable of receiving at least one of the terrestrial broadcast signal and the satellite broadcast signal.

In the meantime, a two-way or bidirectional communication method between the cable broadcast receiver and a broadcast station is classified into an OOB (Out Of Band) method and a DSG (DOCSIS Settop Gateway) method. The OOB method and the DSG method are available for an uplink service within an open cable. By the OOB or DSG method, a user or viewer may selectively view a desired program using a host, may directly participate in a broadcast program, or may selectively view necessary information. The OOD or DSG method may provide the user with a data broadcast service as necessary.

The above-mentioned OOB method is indicative of a standard for prescribing an uplink transmission scheme associated with the cable broadcast (headend). The above-mentioned DSG method is indicative of a data transmission scheme between a cable modem control system of a cable broadcast station and a DOCSIS-based cable modem contained in the settop box. The DOCSIS is indicative of a digital cable television standard adapted by Cablelabs acting as the USA cable broadcast standard certification organization. According to the above-mentioned standard, data may be transmitted to a destination via the cable modem.

The preferred embodiment of FIG. 5 indicates a cable broadcast receiver to which a combination of the OOB method and the DSG method is applied. As can be seen from FIG. 5, the host 100 may include the signal receiving unit 110, the transmitting unit 130, the control unit 140, and the software storage unit 150.

The signal receiving unit 110 include a first tuner 111a, a second tuner 111b, a first demodulator 112, a multiplexer 113, a demultiplexer 114, a decoder 115, a second demodulator 116, and a third tuner 117. The information transmission unit 130 may include a switching unit 138 and a modulator 139.

The first tuner 111a tunes only a specific channel frequency from among the terrestrial audio/video (A/V) broadcast data transmitted via an antenna or cable A/V broadcast data in-band-transmitted via a cable, and transmits the tuned channel frequency to the first demodulator 112. The terrestrial broadcast and the cable broadcast may be transmitted in different ways. The first demodulator 112 may apply different demodulation processes to different demodulation signals, respectively.

For example, it is assumed that the terrestrial A/V broadcast data is modulated by a VSB (Vestigial Sideband Modulation) scheme, and the cable A/V broadcast data is modulated by a QAM (Quadrature Amplitude Modulation) scheme. Under the above-mentioned assumption, the first demodulator 112 may demodulate a signal using the VSB scheme according to a signal selected by the first tuner 111a, or may demodulate the signal using the QAM scheme. The signal demodulated by the first demodulator 112 is multiplexed by the multiplexer, such that the cable broadcast data may be transmitted to the cable card 200 and the terrestrial broadcast data may be transmitted to the demultiplexer 114.

The embodiment of FIG. 5 has considered that the cable card 200 is capable of processing a multi-stream. Therefore, the cable card 200 receives broadcast data created by the multiplexing of at least two streams, and allows a user to view the received broadcast data via the host 100. The demultiplexer 114 receives the multiplexed broadcast signals, divides the multiplexed broadcast signals into a plurality of streams, and outputs the streams. The decoder 115 decodes the received broadcast signals, such that it can output video/audio signals capable of being visually recognized by the user's eyes/ears.

The second tuner 111b tunes a specific channel frequency from among broadcast data transmitted via the cable according to a DSG (DOCSIS Settop Gateway) scheme, and outputs the tuned channel frequency to the second demodulator 116. The second demodulator 116 demodulates DSG-based broadcast signals, and outputs the demodulated broadcast signals to the control unit 140.

The third tuner 117 tunes a specific channel frequency of downlink data broadcast data capable of being transmitted via the cable according to the OOB scheme, and outputs the tuned channel frequency to the cable card 200.

If two-way communication between the cable broadcast station and the cable broadcast receiver is available, uplink information from the cable broadcast receiver to the cable broadcast station may be transmitted according to the OOB or DSG scheme. The cable broadcast receiver according to the present invention may further include the switching unit 138 capable of selecting only one of the above-mentioned schemes, and transmitting necessary information using the selected scheme.

According to the OOB scheme, user-associated information (e.g., user information or software reception information associated with individual hosts) may be transmitted to the cable card 200 and the information transmission unit 130. The information transmission unit 130 transmits the host-associated information to the modulator 139 via the switching unit 138. If required, the modulator may modulate the output signal using the QPSK scheme, and may transmit the modulated resultant signal to the cable broadcast station via the cable.

Provided that the host-associated information is transmitted using the DSG scheme, the information is transmitted to the modulator 139 via the control unit 140 and the switching unit 138, and the modulator 139 modulates signals using a QAM-16 modulation scheme, such that the modulated resultant signals can be transmitted to the cable broadcast station via the cable.

The software storage unit 150 may store software capable of being executed by the cable broadcast receiver.

In the preferred embodiment of FIG. 5, the cable card 200 receives a multi-stream broadcast signal from the multiplexer 113 if the received broadcast data is the terrestrial broadcast data. If the broadcast signal is scrambled, the cable card 200 descrambles the scrambled broadcast signal, such that a user can normally view the cable broadcast data. The cable broadcast 200 receives the software code block information from the cable headend, and transmits the software code block information to the control unit 140. The control unit 140 receives the software code block information, and transmits a transmission request of the software code block to the cable card 200 using the software code block information. If the host transmits download control information including Rx (reception) failure information of some code blocks from among the software code blocks to the cable card 200, the cable card may transmit the download control information to the cable headend.

FIG. 5 shows an example of the cable broadcast receiver including the cable card 200 acting as a signal processing unit capable of processing cable broadcast signals. However, the host may include a DCAS (Downloadable Conditional Access System) acting as a signal processing unit. In other words, the host may include the DCAS with the cable card 200, or may include the DCAS instead of the cable card 200. In this case, the DCAS may perform functions of the cable card 200. The cable headend transmits software code block information to the DCAS. The DCAS transmits the software code block information to the host.

It is determined whether the control unit 140 has received all the software codes. If the determined result is transmitted to the DCAS, the DCAS can transmit information of software code block reception to the cable headend. If the host transmits the Rx failure information of the software code block to the DCAS, the DCAS transmits the Rx failure information to the cable headend. And, the cable headend may re-transmit only the code block to a destination so as to allow the host to re-receive the Rx-failed code blocks.

As apparent from the above description, a cable broadcast receiver and a method for transmitting/receiving cable broadcast software according to the present invention can effectively install or update software of a receiver of a cable broadcast system.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for receiving software by a host, the method comprising:
receiving information of a software code block;
receiving the software code block using the received information; and
outputting download control information including information indicating reception failure of the software code block.

2. The method according to claim 1, wherein the information of the software code block at the receiving step is indicative of at least one of vendor information of the host, hardware version information of the host, and locator information of the software code block.

3. The method according to claim 1, wherein the download control information at the receiving step includes at least one of information indicating beginning of reception of the software code block by the host, information indicating completion of reception of the software code block, information indicating that the host cannot find the software code block to be received from a headend, information indicating a number of retry times for receiving the software code block, information indicating whether the received software code block is damaged, information indicating certification failure of the received software code block, information indicating a maximum number of rebooting retry times after receiving the software code block, and information indicating reception failure of the software code block.

4. The method according to claim 3, wherein the information indicating the reception failure of the specific software code block includes a serial number of the software code block not received.

5. A method for transmitting cable broadcast software to a host comprising:
transmitting information of a software code block;
transmitting the software code block, if a response for requesting the software code block corresponding to the information of the software code block is received; and
re-transmitting the software code block associated with reception failure information, if reception control information including the reception failure information of the software code block is received,.

6. The method according to claim 5, wherein the information of the software code block at the transmitting step for transmitting the information of the software code block is indicative of at least one of vendor information of the host, hardware version information of the host, and locator information of the software code block.

7. The method according to claim 5, wherein the reception failure information at the re-transmitting step is indicative of a serial number of the software code block not transmitted.

8. A method for transmitting/receiving software from a transmission end of software by a host, the method comprising:
transmitting, by the transmission end, information of a software code block;
receiving, by the host, the information of the software code block;
transmitting, by the host, a transmission request of the software code block using the information of the software code block;
transmitting, by the transmitting end, the requested software code block corresponding to the transmission request of the host;
outputting, by the host, download control information including reception failure information of the software code block, if the requested software code block is not received,; and
re-transmitting, by the transmission end, the software code block indicated in the download control information, after receiving the download control information.

9. The method according to claim 8, wherein the information of software code block is indicative of at least one of vendor information of the host, hardware version information of the host, and locator information of the software code block.

10. The method according to claim 8, wherein the download control information comprises at least one of information indicating beginning for receiving the software code block by the host, information indicating completion for receiving the code block, information notifying that the software code block to be received, is not found, information indicating a number of retry for receiving the software code block, information indicating certification failure for receiving the software code block, information indicating a number of a maximum retry for rebooting the host after receiving the software code block, or information indicating reception failure for the software code block.

11. The method according to claim 10, wherein the information indicating reception failure for the software code block is indicative of a serial number of the specific software code block not received.

12. A cable broadcast receiver comprising:
a signal processing unit for receiving information of a software code block;
a signal receiving unit for receiving the software code block associated with the information of the software code block;
a software storage unit for storing the received software code block;
a control unit for transmitting download control information including the reception failure information if the software code block indicated in the information of the received software code block is not received; and
a transmitting unit for transmitting the download control information generated from the control unit.

13. The cable broadcast receiver according to claim 12, wherein the information of a software code block is indicative of at least one of vendor information of the cable broadcast receiver, hardware version information of the cable broadcast receiver, and locator information of the software code block.

14. The cable broadcast receiver according to claim 12, wherein the download control information includes at least one of information indicating beginning of reception of the software code block by the cable broadcast receiver, information indicating completion of reception of the software code block, information indicating that the cable broadcast receiver cannot find the software code block to be received from a headend, information indicating a number of retry times for receiving the software code block, information indicating whether the received software code block is damaged, information indicating certification failure of the received software code block, information indicating a maximum number of rebooting retry times after receiving the software code block, and information indicating reception failure of the software code block.

15. The cable broadcast receiver according to claim 14, wherein the information indicating the reception failure of the software code block includes a serial number of the software code block not received.
